(19) Europäisches Patentamt
European Patent Office
Office européen des brevets

(11) EP 4 597 860 A1

(12) EUROPEAN PATENT APPLICATION
published in accordance with Art. 153(4) EPC

(43) Date of publication:
06.08.2025 Bulletin 2025/32

(21) Application number: 23909778.5

(22) Date of filing: 21.11.2023

(51) International Patent Classification (IPC):
H04B 7/0456 (2017.01)

(52) Cooperative Patent Classification (CPC):
H04B 7/0456; H04B 7/06

(86) International application number:
PCT/CN2023/132898

(87) International publication number:
WO 2024/139846 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211697500

(71) Applicant: ZTE CORPORATION
Shenzhen, Guangdong 518057 (CN)

(72) Inventors:
• YANG, Jun
Shenzhen, Guangdong 518057 (CN)

• CHEN, Yijian
Shenzhen, Guangdong 518057 (CN)
• JIAN, Mengnan
Shenzhen, Guangdong 518057 (CN)
• YU, Hongkang
Shenzhen, Guangdong 518057 (CN)
• DOU, Jianwu
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) CHANNEL INFORMATION FEEDBACK METHOD, AND ELECTRONIC DEVICE AND COMPUTER-READABLE MEDIUM

(57) The embodiments of the present application relate to the technical field of wireless communications. Provided are a channel information feedback method, and an electronic device and a computer-readable medium. The channel information feedback method comprises: performing channel estimation according to a first pilot signal sent by a first communication node, so as to acquire first channel information; according to the first channel information, determining a codebook set for quantized channel feedback; selecting an optimal codeword from the codebook set, wherein the optimal codeword is used for quantitatively characterizing the first channel information; and feeding back target instruction information to the first communication node, wherein the target instruction information is used for instructing the first communication node to determine the optimal codeword, and codewords in the codebook set conform to the following model:

$$W = \begin{bmatrix} \alpha_1 v_1 & \alpha_2 v_2 \\ \alpha_3 v_3 & \alpha_4 v_4 \end{bmatrix}$$

where W is a vector or matrix of Nt rows and r columns, $Nt \geq 2$ and Nt is an integer, $r \geq 1$ and r is an integer, $v_i$ is a precoding vector or precoding matrix for array beam regulation, $\alpha_i$ is a complex number, and $i \in \{1, 2, 3, 4\}$.

FIG. 1

- S110 Perform channel estimation according to a first pilot signal sent by a first communication node, so as to acquire first channel information
- S120 Determine a codebook set for quantized channel feedback according to the first channel information
- S130 Select an optimal codeword from the codebook set
- S140 Feed back target instruction information to the first communication node

**Description**

CROSS-REFERENCE TO RELATED APPLICATIONS

The present application claims priority to Chinese Patent Application No. 202211697500.6, filed to the China Patent Office on December 28, 2022 and entitled "CHANNEL INFORMATION FEEDBACK METHOD, AND ELECTRONIC DEVICE AND COMPUTER-READABLE MEDIUM", the entire of which is incorporated herein by reference.

TECHNICAL FIELD

The present application relates to the technical field of wireless communications, in particular to a channel information feedback method, and an electronic device and a computer-readable medium.

BACKGROUND

In multiple-input multiple-output (MIMO) wireless communications, a wireless base station needs to determine a preferable downlink precoding according to channel information, a transmitting end performs beam regulation according to the downlink precoding, so that a transmitting beam is aligned with a receiving end, and thus the space division multiplexing efficiency is improved.

At present, the channel information may be acquired by a dual-polarized channel feedback model. The model adopts constant modulus precoding, and in a case where the dual-polarized signal power has a difference and is affected by the amplitude, constant modulus precoding does not consider influence of a non-constant modulus in a case of off-axis, which possibly causes great performance loss.

SUMMARY

An objective of embodiments of the present application is to provide a channel information feedback method, and an electronic device and a computer-readable medium, which can reduce feedback resource overhead of channel information while beam performance is improved.

To solve the foregoing technical problems, the embodiments of the present application are implemented through the following aspects.

In a first aspect, an embodiment of the present application provides a channel information feedback method, including: performing channel estimation according to a first pilot signal sent by a first communication node, so as to acquire first channel information; determining a codebook set for quantized channel feedback according to the first channel information; selecting an optimal codeword from the codebook set, where the optimal codeword is used for quantitatively characterizing the first channel information; and feeding back target indication information to the first communication node, where the target indication information is used for indicating the first communication node to determine the optimal codeword; where codewords in the codebook set conform to the following model:

$$W = \begin{bmatrix} \alpha_1 v_1 & \alpha_2 v_2 \\ \alpha_3 v_3 & \alpha_4 v_4 \end{bmatrix}$$

where W is a vector or matrix with Nt rows and r columns, Nt≥2 and Nt is an integer, r≥1 and r is an integer, $v_i$ is a precoding vector or precoding matrix for array beam regulation, $\alpha_i$ is a complex number, and i E {1,2,3,4}.

In a second aspect, an embodiment of the present application provides a channel information feedback apparatus, including an estimating module, configured to perform channel estimation according to a first pilot signal sent by a first communication node, so as to acquire first channel information; a first determining module, configured to determine a codebook set for quantized channel feedback according to the first channel information; a selecting module, configured to select an optimal codeword from the codebook set, where the optimal codeword is used for quantitatively characterizing the first channel information; and a feedback module, configured to feed back target indication information to the first communication node, where the target indication information is used for indicating the first communication node to determine the optimal codeword, where codewords in the codebook set conform to the following model:

$$W = \begin{bmatrix} \alpha_1 v_1 & \alpha_2 v_2 \\ \alpha_3 v_3 & \alpha_4 v_4 \end{bmatrix}$$

where W is a vector or matrix with Nt rows and r columns, Nt≥2 and Nt is an integer, r≥1 and r is an integer, $v_i$ is a precoding vector or precoding matrix for array beam regulation, $\alpha_i$ is a complex number, and i E {1,2,3,4}.

In a third aspect, an embodiment of the present application provides an electronic device, including: a memory, a processor and computer-executable instructions stored on the memory and capable of running on the processor, where the computer-executable instructions, when executed by the processor, implement the channel information feedback method in the first aspect.

In a fourth aspect, an embodiment of the present application provides a computer-readable storage medium, the computer-readable storage medium is used for storing computer-executable instructions, and the computer-executable instructions, when executed by a processor, implement the channel information feedback method in the first aspect.

BRIEF DESCRIPTION OF DRAWING(S)

In order to more clearly describe technical solutions in embodiments of the present application or in the prior art, the accompanying drawings needed by the description in the embodiments or in the prior art will be briefly introduced below. Apparently, the accompanying drawings in the following description are only some embodiments recorded in the present application. Those ordinarily skilled in the art may also obtain other accompanying drawings according to these accompanying drawings without making creative work.

FIG. 1 is a schematic flowchart of a channel information feedback method provided by an embodiment of the present application.
FIG. 2 is a schematic flowchart of a channel information feedback method provided by another embodiment of the present application.
FIG. 3 is a schematic structural diagram of a channel information feedback apparatus provided by an embodiment of the present application.
FIG. 4 is a schematic structural diagram of hardware for implementing an electronic device provided by an embodiment of the present application.

DETAILED DESCRIPTION

In order to make those skilled in the art better understand technical solutions in the present application, the technical solutions in the embodiments of the present application are described clearly and completely below with reference to the accompanying drawings in the embodiments of the present application. Apparently, the described embodiments are merely some embodiments but not all embodiments of the present application. All other embodiments obtained by those ordinarily skilled in the art based on the embodiments in the present application without making creative efforts should fall within the protection scope of the present application.

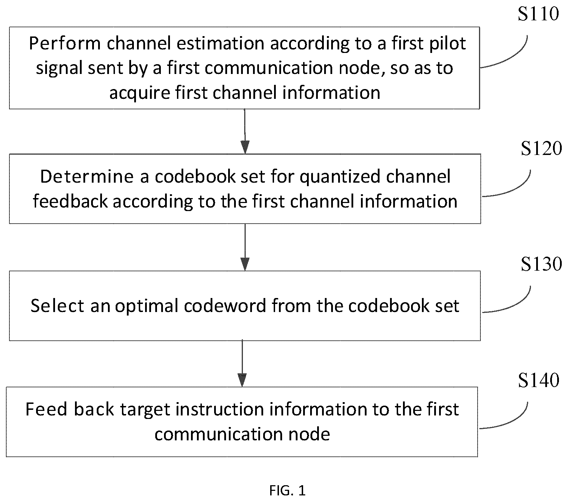

FIG. 1 is a schematic flowchart of a channel information feedback method provided by an embodiment of the present application. The method is applied to an MIMO wireless communication and may be performed by an electronic device, such as a terminal device or a base station device. In other words, the method may be performed by software or hardware mounted in the terminal device or the base station device. The terminal device includes, but is not limited to a personal mobile terminal, a vehicle terminal, an Internet of Things terminal, a sensor terminal and the like. The base station device includes, but is not limited to: various devices for providing a wireless access service, such as an outdoor macrostation, a microstation, a mobile base station and an indoor base station. As shown in the figure, the method may include the following steps S110 to S140.

At Step S110: channel estimation is performed according to a first pilot signal sent by a first communication node, so as to acquire first channel information.

A transmitting end sends a pilot signal to a receiving end, the receiving end calculates a channel matrix according to the received pilot signal, and channel information calculated based on the channel matrix is fed back to the transmitting end.

In some cases, the first pilot signal is a known signal sequence sent by the first communication node of the transmitting end. It is assumed that the sequence is s, a receiving signal of the receiving end may be represented as $y = Hs + n$, where H is the channel matrix, y is a receiving signal vector, and n is a noise vector. The channel estimation may be completed by using a minimum mean square error (MMSE), a low-order linear minimum mean square error (LMMSE) and other algorithms, so that the channel matrix H is obtained. H tends to include a lot of dimensions, direct feedback of H to the first communication node may cause relatively high resource overhead, so the obtained first channel information usually needs to be quantized.

At Step S120: a codebook set for quantized channel feedback is determined according to the first channel information.

The codebook set is a set composed of a group of precoding, where each precoding is a codeword, and each codeword corresponds to a group of indication information. A plurality of codebooks are usually preset according to different transmission scenarios and transmission requirements. An appropriate codebook may be determined according to the obtained first channel information. For example, the maximum number of transmission layers of a current channel may be determined according to a rank of H or corresponding channel quality information, and thus a suitable codebook set may be determined.

Codewords in the codebook set conform to the following model:

$$W = \begin{bmatrix} \alpha_1 v_1 & \alpha_2 v_2 \\ \alpha_3 v_3 & \alpha_4 v_4 \end{bmatrix} \qquad (1)$$

where W is a vector or matrix with Nt rows and r columns, Nt$\geq$2 and Nt is an integer, r$\geq$1 and r is an integer, $v_i$ is a precoding vector or precoding matrix for array beam regulation, $\alpha_i$ is a complex number, and i E {1,2,3,4}.

Optionally, the model is composed of four precoding vectors or matrices $v_1$, $v_2$, $v_3$ and $v_4$ and four corresponding complex coefficients $\alpha_1$, $\alpha_2$, $\alpha_3$ and $\alpha_4$. In some cases, when precoding corresponding to the precoding vectors or the matrices are loaded on an MIMO array, one beam or one group of beams may be emitted in a specified direction.

When $v_i$ is a vector, it has the following form,

$$v_i = [v_{i,1} \otimes v_{i,2}]^T \qquad (2)$$

where an operator $\otimes$ represents a Kronecker product, $v_{i,1}$ and $v_{i,2}$ represent two basis vectors respectively, and a superscript T represents transposition. In an optional wireless communication scenario, $v_{i,1}$ and $v_{i,2}$ may be represented in the following form,

$$v_{i,1} = \begin{cases} \begin{bmatrix} 1 & e^{j\theta_1} & \cdots & e^{j(N_1-1)\theta_1} \end{bmatrix}, N_1 > 1, \\ 1, N_1 = 1, \end{cases} \qquad (3)$$

$$v_{i,2} = \begin{cases} \begin{bmatrix} 1 & e^{j\theta_2} & \cdots & e^{j(N_2-1)\theta_2} \end{bmatrix}, N_2 > 1, \\ 1, N_2 = 1, \end{cases} \qquad (4)$$

where $\theta_1 \in [0,2\pi)$, $\theta_2 \in [0,2\pi)$. In another optional wireless scenario, $v_{i,1}$ and $v_{i,2}$ may be represented in the following form,

$$v_{i,1} = \begin{cases} \begin{bmatrix} 1 & e^{j\theta_1^{(1)}} & \cdots & e^{j\theta_1^{(N_1-1)}} \end{bmatrix}, N_1 > 1, \\ 1, N_1 = 1, \end{cases} \qquad (5)$$

$$v_{i,2} = \begin{cases} \begin{bmatrix} 1 & e^{j\theta_2^{(1)}} & \cdots & e^{j\theta_2^{(N_2-1)}} \end{bmatrix}, N_2 > 1, \\ 1, N_2 = 1, \end{cases} \qquad (6)$$

where $\theta_k^{(n)} = \theta_{k,0} + n\theta_{k,1} + n^2\theta_{k,2}$, and and $k \in \{1,2\}$, $n \in \{1,2,\cdots,N_k\}$.

When $v_i$ is a matrix, it has the following form,

$$v_i = \begin{bmatrix} v_{i1,1} \otimes v_{i1,2} \\ v_{i2,1} \otimes v_{i2,2} \\ \cdots \\ v_{iN,1} \otimes v_{iN,2} \end{bmatrix}^T, \qquad (7)$$

where $v_{iN,k}$ and $v_{i,k}$ have the same form, $k \in \{1,2\}$, and $n \in \{1,2,\cdots,N\}$. In the formulas, $v_i$ is composed of N column vectors, which may correspond to beams in N emitting directions.

At Step S130: an optimal codeword is selected from the codebook set.

A codebook is actually a quantization form of a spatial channel, the codewords included in the codebook represent information of one of spatial channels, and a codeword matching the current channel needs to be selected from the codebook so as to be used for information transmission. The matching codeword, namely, the optimal codeword, is used for quantitatively characterizing the first channel information. Matching may be understood as the precoding vector of the codeword is closest to or most highly correlated with an eigenvector of the current channel, so the optimal codeword may be determined from the selected codebook according to a distance index or a correlation index.

In some cases, a precoding codebook suitable for the MIMO array may be generated according to the above codeword model, and a corresponding codeword may be selected from the codebook according to information corresponding to each codeword so as to be used for array beam regulation.

At Steps S140: target indication information is fed back to the first communication node.

The target indication information is used for indicating the first communication node to determine the optimal codeword. The optimal codeword is composed of one or more precoding vectors, and due to the fact that direct feedback of the codeword to the first communication node may cause great channel resource overhead, only the target indication information corresponding to the optimal codeword is fed back to the first communication node.

The target indication information is usually composed of several parameters with discrete values, for example, may be composed of a group of numerical numbers or other identifiers, and these numerical numbers or identifiers are used for indicating a current codebook set, a sequence and a position of a current codeword in the codebook set, or a method for generating the codeword.

In some cases, according to the above codeword model, there are respectively four pieces of parameter indication information corresponding to the four complex coefficients $\alpha_1$, $\alpha_2$, $\alpha_3$ and $\alpha_4$. Similarly, there are respectively four pieces of parameter indication information corresponding to the four precoding matrices or vectors $v_1$, $v_2$, $v_3$ and $v_4$. Thus, the indication information of one codeword may include at most eight pieces of parameter indication information, but the codeword may usually be determined not by all the eight pieces of parameter indication information. The length of the indication information may be reduced by feeding back the target indication information including part of the parameter indication information so as to reduce the feedback resource overhead.

Through the channel information feedback method provided by the embodiment of the present application, channel estimation is performed through the first pilot signal sent by the first communication node, so as to acquire the first channel information; the codebook set for the quantized channel feedback is determined according to the first channel information; the optimal codeword is selected from the codebook set, where the optimal codeword is used for quantitatively characterizing the first channel information; and the target indication information is fed back to the first communication node, where the target indication information is used for indicating the first communication node to determine the optimal codeword; where the codewords in the codebook set conform to the following model:

$$W = \begin{bmatrix} \alpha_1 v_1 & \alpha_2 v_2 \\ \alpha_3 v_3 & \alpha_4 v_4 \end{bmatrix} \qquad (1)$$

where W is the vector or matrix with Nt rows and r columns, Nt≥2 and Nt is the integer, r≥1 and r is the integer, $v_i$ is the precoding vector or precoding matrix for array beam regulation, $\alpha_i$ is the complex number, *and i* ∈ {1,2,3,4}. On the one hand, the target indication information corresponds to the optimal codeword of the codebook set, on the other hand, a length of the target indication information is less than the length of the channel matrix and occupies fewer resources, and the feedback resource overhead of the channel information can be reduced while the beam performance is improved.

In a possible implementation, the target indication information includes first indication information for indicating $v_i$ and second indication information for indicating $\alpha_k$, where $v_i$ and $\alpha_k$ meet: a value set of $v_i$ is determined by a value of $\alpha_k$; or a value set of $\alpha_k$ is determined by a value of $v_i$.

The first indication information for indicating $v_i$ may be composed of indication information of at least one of the four precoding vectors or matrices, and the second indication information for indicating $\alpha_k$ may be composed of indication information of at least one of the four complex coefficients.

In some scenarios, the target indication information includes indication information of one of the four complex coefficients and indication information of one of the four precoding vectors or matrices, for example, indication information of $\alpha_1$ and $v_1$ may be selected to constitute the target indication information for feedback. In some other scenarios, the indication information may be composed of the indication information of one of the four complex coefficients and indication information of two of the four precoding vectors or matrices, for example, composed of indication information of $\alpha_3$, $v_3$ and $v_4$. In a more complex communication scenario, the indication information may be composed of indication information of all the four complex coefficients and indication information of the four precoding vectors or matrices. The above is only examples, and the actual number of pieces of parameter indication information constituting the target indication information may be determined and adjusted according to a specific wireless communication scenario.

The first indication information and the second indication information are in a dependency relationship, namely, the four complex coefficients and the four precoding vectors or matrices are in a dependency relationship, at least part of parameters between $v_i$ and $\alpha_k$ are interdependent, namely, after values of some parameters are determined, value ranges of other parameters may be determined directly.

Optionally, a dual-polarized signal emitted in different directions may have different polarization characteristics, the dual-polarized signal received by the receiving end has a power difference, and the dual-polarized signal emitted in different directions needs optimization of signal amplitude regulation. For example, the regulation amplitude is indicated by using a modulus of the complex coefficient $\alpha_k$, a signal emitting direction is indicated by using $v_i$, a value range of the regulation amplitude $\alpha_k$ may be determined according to the emitting direction $v_i$, on the contrary, a range of the emitting direction $v_i$ may be determined according to the determined signal amplitude $\alpha_k$, and thus a value range of the precoding vector or matrix may be determined. In other words, a value range of at least one of the four complex coefficients $\alpha_k$ may be determined by the indication information of one of the four precoding vectors or matrices $v_i$, and the value range of the at least one of the four precoding vectors or matrices $v_i$ may also be determined through the indication information of one of the four complex coefficients $\alpha_k$.

In some cases, the above dependency relationship between $v_i$ and $\alpha_k$ may refer to the following Table 1. In the table, $S_{rm}$ represents a value set of the corresponding parameter, where i ∈ {1,2,3,4}, $k$ ∈ {1,2,3,4}, $r$ ∈ {1,2,...,8}, $m$ ∈ {1,2,···,M} and $S_{rm}$ may be understood as a subcodebook. For example, when value ranges of $v_1$, $v_2$, $v_3$ and $v_4$ are respectively $S_{11}$, $S_{21}$, $S_{31}$ and $S_{41}$, values of $\alpha_1$, $\alpha_2$, $\alpha_3$ and $\alpha_4$ may be taken only from four sets of $S_{51}$, $S_{61}$, $S_{71}$ and $S_{81}$ respectively, in other words, after the values of $v_1$, $v_2$, $v_3$ and $v_4$ are determined, value ranges of $\alpha_1$, $\alpha_2$, $\alpha_3$ and $\alpha_4$ are determined. Further, $S_{rm}$ at least includes one element, and $S_{rm}$ may be equal to $S_{nm}$, where n≠r. For example, $S_{11}=S_{21}=S_{31}=S_{41}$, in this case, by determining the value range of only one of $v_1$, $v_2$, $v_3$ and $v_4$, the value ranges of the other three of them may be determined, and the value ranges of $\alpha_1$, $\alpha_2$, $\alpha_3$ and $\alpha_4$ may be determined at the same time. Similarly, on the contrary, if the value ranges of $\alpha_1$, $\alpha_2$, $\alpha_3$ and $\alpha_4$ are determined, the value ranges of $v_1$, $v_2$, $v_3$ and $v_4$ may also be determined. It may be understood that different coefficient sets are equivalent to subcodebooks, namely, through a value of one parameter, a subcodebook where the other parameter is located may be determined. When the subcodebook has only one codeword, selecting the subcodebook is equivalent to determining a value of the parameter.

Table 1

| Parameter / Number of set | $v_1$ | $v_2$ | $v_3$ | $v_4$ | $\alpha_1$ | $\alpha_2$ | $\alpha_3$ | $\alpha_4$ |
|---|---|---|---|---|---|---|---|---|
| 1 | $S_{11}$ | $S_{21}$ | $S_{31}$ | $S_{41}$ | $S_{51}$ | $S_{61}$ | $S_{71}$ | $S_{81}$ |
| 2 | $S_{12}$ | $S_{22}$ | $S_{32}$ | $S_{42}$ | $S_{52}$ | $S_{62}$ | $S_{72}$ | $S_{82}$ |
| ... | ... | ... | ... | ... | ... | ... | ... | ... |
| M | $S_{1M}$ | $S_{2M}$ | $S_{3M}$ | $S_{4M}$ | $S_{5M}$ | $S_{6M}$ | $S_{7M}$ | $S_{8M}$ |

Table 1

As the first indication information and the second indication information are in a dependency relationship, when one of the first indication information and the second indication information is determined, the other one of them may be determined. When channel information is fed back, the optimal codeword may usually be determined without all the indication information, so the length of the indication information may be reduced, and overhead of feedback resources is further reduced.

In a possible implementation, at least one piece of first indication information indicates whether moduli of values in a value set of at least one $\alpha_k$ are equal.

For example, upon the condition that the first indication information is used for indicating the emitting direction of a beam, when included angles between the emitting directions and an array normal are different, moduli of different complex coefficients in the value set of $\alpha_k$ may be equal or unequal.

For example, when the included angle between the beam direction indicated by the indication information of $v_1$ and the array normal is less than 15°, the four complex coefficients may be composed of a coefficient set with the modulus being 1.0, namely, moduli of respective elements in the value set of $\alpha_1$ corresponding to $v_1$ are equal. Referring to Table 1, it may be understood that there is a set $S_{1m}$, when the indication information of $v_1$ indicates that the value of $v_1$ is taken on $S_{1m}$ and the included angles between corresponding beams of precoding in $S_{1m}$ and the array normal are all less than 15°, moduli of elements in the value set $S_{5m}$ of $\alpha_1$ are equal. In some scenarios, the four complex coefficients may have the same modulus and may be determined according to the indication information of $v_i$. The complex coefficients with the equal moduli may include $\alpha_1 = \alpha_2 = \alpha_3 = -\alpha_4 = 1$, $\alpha_1 = \alpha_3 = 1, \alpha_2 = -\alpha_4 = j$, $\alpha_1 = \alpha_2 = \alpha_3 = -\alpha_4 = \frac{\sqrt{2}}{2}$, $\alpha_1 = \alpha_3 = \frac{\sqrt{2}}{2}, \alpha_2 = -\alpha_4 = \frac{\sqrt{2}}{2}j$ or the like, and $j$ in the formula represents an imaginary unit.

For example, when the included angle between the beam direction indicated by the indication information of $v_1$ and the array normal is greater than 15°, the moduli of the elements in the value set of $\alpha_k$ corresponding to the value of $v_1$ are not equal, for example, the complex coefficients may adopt $\alpha_1 = \alpha_3 = 1, \alpha_2 = -\alpha_4 = 0.6$, $\alpha_1 = \alpha_3 = 1, \alpha_2 = -\alpha_4 = 0.6j$ or the like. When the value ranges or even values of $v_1$, $v_2$, $v_3$ and $v_4$ are the same, the value sets of the four complex coefficients may be determined only by one of sets, and in a more complex scenario, the value set of $\alpha_k$ may be determined through indication information of a plurality of $v_i$.

In a possible implementation, at least one piece of first indication information indicates the value range of a value set of at least one $\alpha_k$.

Still taking the first indication information being used for indicating the emitting direction of the beam as an example, different values of $\alpha_k$ may be determined according to the difference of included angles between the emitting direction and the array normal.

For example, when the included angle between the beam direction corresponding to $v_i$ and the array normal is in a range from 15° to 30°, the corresponding $\alpha_k$ is composed of a coefficient set with a modulus being in a range of [0.8, 1]; and when the included angle between the beam direction corresponding to $v_i$ and the array normal is in a range from 30° to 60°, correspondingly, $\alpha_k$ is composed of a coefficient set with a modulus being in a range of [0.2, 0.8].

Referring to Table 1, one piece of indication information of $v_i$ corresponds to a value set $S_{im}$, the included angle between the beam direction corresponding to a precoding in $S_{im}$ and the array normal is in a range from 15° to 30°, in this case, moduli of all elements in a value set $S_{(k+4)m}$ of $\alpha_k$ located in the same row of the table are all greater than or equal to 0.8 but less than and equal to 1.0; and the other piece of indication information of $v_i$ corresponds to the other value set $S_{it}$, an included angle between a beam direction corresponding to a precoding in $S_{it}$ and the array normal is in a range from 30° to 60°, in this case, moduli of all elements in the value set $S_{(k+4)t}$ of $\alpha_k$ located in the same row of the table are all greater than or equal to 0.2 but less than and equal to 0.8, where $1 \leq m \leq M$, and $1 \leq t \leq M$. When the value ranges or even values of $v_1$, $v_2$, $v_3$ and $v_4$ are the same, the value sets of the four complex coefficients may be determined only by one of sets, and in a more complex scenario, a value range of each element in the value set of $\alpha_k$ may be determined through indication information of more than one $v_i$.

It may be known from the above that as $v_i$ and $\alpha_k$ are in a determined dependency relationship in a dual-polarized channel, information related to $\alpha_k$ may be determined according to the first indication information, including a value set, moduli of elements in the value set, and the like. Actually, on the contrary, information related to $v_i$ may also be determined according to the second indication information for determining $\alpha_k$, including a value set, a beam angle range corresponding to each precoding in the value set, and the like.

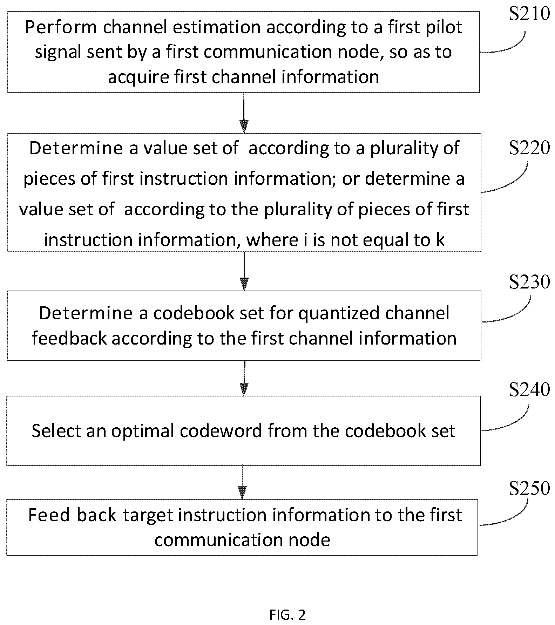

FIG. 2 is a schematic flowchart of a channel information feedback method provided by another embodiment of the present application. As shown in the figure, the method may include the following steps S210 to S250.

At Step S210: channel estimation is performed according to a first pilot signal sent by a first communication node, so as to acquire first channel information.

This step adopts the description of the corresponding step in the embodiment of FIG. 1 and will not be described in detail.

At Step S220: a value set of $\alpha_k$ is determined according to a plurality of pieces of first indication information; or a value set of $v_k$ is determined according to a plurality of pieces of first indication information, where i is not equal to k.

Optionally, when there are at least two different sets in four value sets corresponding to $v_1$, $v_2$, $v_3$ and $v_4$, a value set of $\alpha_k$ needs to be determined according to indication information of a plurality of $v_i$. For example, when there is a non-line-of-sight path, an amplitude coefficient usually needs to be determined according to multipath information, and in this case, the value set of $\alpha_k$ needs to be determined through the indication information of the plurality of $v_i$.

Optionally, value sets of $v_2$, $v_3$ and $v_4$ may be determined according to the indication information of $v_1$. For example, for a line-of-sight propagation scenario of a dual-polarized signal, the dual-polarized signal passes through the same channel, so the dual-polarized signal may adopt the same precoding. In a more general scenario, value sets of $v_3$ and $v_4$ may also be determined according to indication information of $v_1$ and $v_2$, or value sets of $v_1$ and $v_2$ are determined according to indication information of $v_3$ and $v_4$.

At Step S230: a codebook set for quantized channel feedback is determined according to the first channel information.

At Step S240: an optimal codeword is selected from the codebook set.

At Step S250: target indication information is fed back to the first communication node.

Steps S230 to S250 adopt the description of the corresponding steps in the embodiment of FIG. 1 and will not be described in detail.

Through the channel information feedback method provided by the present embodiment, the value sets of $\alpha_k$ may be determined according to the plurality of pieces of first indication information; or the value set of $v_k$ is determined according to the plurality of pieces of first indication information, where i is not equal to k, prior to determining the codebook set according to the first channel information, value sets of the first indication information and the second indication information are determined, and the codebook set more suitable for indicating current channel information is obtained, so as to effectively perform channel information feedback.

In a possible implementation, in the model, $v_1 = v_3, v_2 = v_4, \alpha_1 = \alpha_2 = 1$, and $\alpha_4 = -\alpha_3 = \alpha$ are met, where $\alpha$ is a complex number, and codewords in the codebook set conform to the following model:

$$W = \begin{bmatrix} v_1 & v_2 \\ \alpha v_1 & -\alpha v_2 \end{bmatrix} \qquad (8)$$

This model is obtained by simplifying the above codeword model, where a dependency relationship between $v_i$ and $\alpha$ is shown in Table 2.

Table 2

| Parameter / Number of set | $v_1$ | $v_2$ | $\alpha$ |
|---|---|---|---|
| 1 | $S_{11}$ | $S_{21}$ | $S_{51}$ |
| 2 | $S_{12}$ | $S_{22}$ | $S_{52}$ |
| ... | ... | ... | ... |
| M | $S_{1M}$ | $S_{2M}$ | $S_{5M}$ |

Table 2

In this case, the indication information of one codeword at most includes three pieces of parameter indication information, namely, indication information of a complex coefficient $\alpha$ and indication information of two precoding vectors or matrices $v_1$ and $v_2$. In this case, the length of the target indication information is further reduced, and during feedback of the channel information, occupied feedback resources are further reduced.

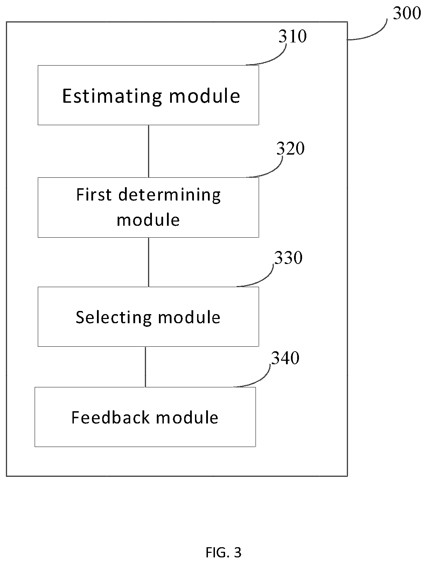

FIG. 3 is a schematic structural diagram of a channel information feedback apparatus provided by an embodiment of the present application. The apparatus 300 includes: an estimating module 310, a first determining module 320, a selecting module 330 and a feedback module 340.

The estimating module 310 is configured to perform channel estimation according to a first pilot signal sent by a first communication node, so as to acquire first channel information; the first determining module 320 is configured to determine a codebook set for quantized channel feedback according to the first channel information; the selecting module 330 is configured to select an optimal codeword from the codebook set, where the optimal codeword is used for quantitatively characterizing the first channel information; and the feedback module 340 is configured to feed back target indication information to the first communication node, where the target indication information is used for indicating the first communication node to determine the optimal codeword. Codewords in the codebook set conform to the following model:

$$W = \begin{bmatrix} \alpha_1 v_1 & \alpha_2 v_2 \\ \alpha_3 v_3 & \alpha_4 v_4 \end{bmatrix} \qquad (1),$$

where W is a vector or matrix with Nt rows and r columns, Nt≥2 and Nt is an integer, r≥1 and r is an integer, $v_i$ is a precoding vector or precoding matrix for array beam regulation, $\alpha_i$ is a complex number, and i E {1,2,3,4}.

In a possible implementation, the target indication information includes first indication information for indicating $v_i$ and second indication information for indicating $\alpha_k$, where $v_i$ and $\alpha_k$ meet: a value set of $v_i$ is determined by a value of $\alpha_k$; or a value set of $\alpha_k$ is determined by a value of $v_i$.

In a possible implementation, at least one piece of first indication information indicates whether moduli of values in a value set of at least one $\alpha_k$ are equal.

In a possible implementation, at least one piece of first indication information indicates a value range of a value set of at least one $\alpha_k$.

In a possible implementation, the channel information feedback apparatus further includes a second determining module which is configured to determine a value set of $\alpha_k$ according to the plurality pieces of first indication information prior to determining the codebook set for the quantized channel feedback according to the channel information; or determine a value set of $v_k$ according to the plurality pieces of first indication information, where i is not equal to k.

In a possible implementation, in the model, $v_1 = v_3, v_2 = v_4$, $\alpha_1 = \alpha_2 = 1$, and $\alpha_4 = -\alpha_3 = \alpha$ are met, where $\alpha$ is a complex number, and codewords in the codebook set conform to the following model:

$$W = \begin{bmatrix} v_1 & v_2 \\ \alpha v_1 & -\alpha v_2 \end{bmatrix} \qquad (8)$$

The apparatus 300 provided by the embodiment of the present application may perform each method described in the above method embodiment and implement functions and beneficial effects of each method described in the above method embodiment, which is not described in detail here.

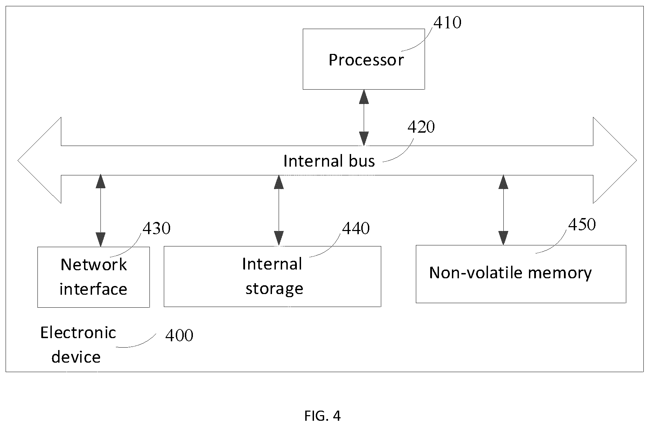

FIG. 4 is a schematic structural diagram of hardware of an electronic device 400 for implementing the channel information feedback method provided by the embodiment of the present application. Referring to the figure, in the hardware level, the electronic device includes a processor 410, and optionally, includes an internal bus 420, a network interface 430 and a memory. The memory may include an internal storage 440, for example: a high-speed randomaccess memory (RAM), or may also include a non-volatile memory 450, for example, at least one disk memory, or the like. Certainly, the electronic device may also include hardware needed by other services.

The processor 410, the network interface 430 and the memory may be mutually connected through the internal bus 420. The internal bus may be an industry standard architecture (ISA) bus, a peripheral component interconnect (PCI) bus or an extended industry standard architecture (EISA) bus. The bus may be divided into an address bus, a data bus, a control bus, or the like. For convenience of representation, only one double sided arrow is used for representing in the figure, which does not mean that there is only one bus or one type of bus.

The memory is configured to store a program. Specifically, the program may include a program code, and the program code includes a computer operation instruction. The memory may include the internal storage 440 and the non-volatile memory 450 and provides an instruction and data for the processor 410.

The processor 410 reads the corresponding computer program from the non-volatile memory 450 into the internal storage 440 to run so as to form an apparatus for locating a target user on a logical level. The processor 440 executes the program stored in the memory and is specifically configured to perform the method in the embodiments of FIG. 1 to FIG. 2, so as to achieve the same or corresponding technical effects.

The method disclosed in the above embodiments shown in FIG. 1 to FIG. 2 in the present application may be applied to the processor 410 or implemented by the processor 410. The processor 410 may be an integrated circuit chip with a signal processing capability. During an implementing process, various steps of the above method may be completed by an integrated logic circuit of hardware in the processor 410 or instructions of a software form. The above processor 410 may be a general-purpose processor, including a central processing unit (CPU), a network processor (NP) or the like; and may also be a digital signal processor (DSP), an application specific integrated circuit (ASIC), a field-programmable gate array (FPGA) or another programmable logic device, a discrete gate or a transistor logic device and a discrete hardware component. Each method, steps and logical block diagrams disclosed in the embodiments of the present application may be implemented or performed. The general-purpose processor may be a microprocessor or the processor may also be any conventional processor. The steps of the methods disclosed by the embodiments of the present application may be directly embodied by being performed and completed by a hardware decoding processor, or performed and completed by a combination of hardware and software modules in the decoding processor. The software module may be located in a storage medium mature in the art such as a random access memory, a flash memory, a read-only memory, a programmable read-only memory or an electrically erasable programmable memory and a register. The storage medium is located in the memory, and the processor 410 reads information in the memory, and completes steps of the above method in combination with hardware.

The electronic device may also perform each method described in the above method embodiment and implement functions and beneficial effects of each method described in the above method embodiment, which is not described in detail here.

In addition to a software implementation mode, the electronic device of the present application does not exclude other implementation modes, such as a logic device or software and hardware combined mode, that is, an executive body of the following processing flows is not limited to each logical unit, and may also be a hardware or logic device.

An embodiment of the present application further provides a computer-readable storage medium, the computer-readable medium stores one or more programs, where the one or more programs, when executed by an electronic device including a plurality of application programs, cause the electronic device to perform the method in the embodiments of FIG. 1 to FIG. 2 and achieve the same or corresponding technical effects.

The computer-readable storage medium includes a read-only memory (ROM), a random access memory (RAM), a diskette or an optical disc.

Further, an embodiment of the present application further a computer program product, the computer program product includes a computer program stored on a non-transitory computer-readable storage medium, the computer program includes program instructions, and the program instructions, when executed by a computer, implement the method in the embodiment of FIG. 1 and achieve the same or corresponding technical effects.

To sum up, the foregoing descriptions are merely preferred embodiments of the present application and are not intended to limit the protection scope of the present application. Any modification, equivalent replacement, or improvement made without departing from the spirit and principle of the present application shall fall within the protection scope of the present application.

A system, device, module or unit described in the above embodiments may be specifically implemented through a computer chip or an entity, or implemented by a product with a certain function. A typical implementation device is a computer. Specifically, the computer may be, for example, a personal computer, a laptop computer, a cell phone, a camera phone, a smart phone, a personal digital assistant, a media player, a navigation device, an e-mail device, a game console, a tablet computer, a wearable device or any combination of these devices.

The computer-readable medium includes non-volatile and volatile, mobile and removable media capable of implementing information storage in any method or technology. Information may be the computer-readable instructions, a data structure, program modules or other data. Examples of storage media of the computer include, but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another internal memory technology, a compact disc read-only memory (CD-ROM), a digital versatile disc (DVD) or another optical memory, a magnetic cassette tape, a magnetic tape disk memory or another magnetic storage device or any other non-transmitting medium, being applicable to storing information that the computing device may access. According to definition herein, the computer-readable medium does not include transitory media, such as a modulated data signal and a carrier wave.

It needs to be further noted that terms "include", "comprise" or any other variants thereof are intended to cover non-exclusive including, so that a process, method, product or device including a series of elements include not only those elements, but also other elements not listed explicitly, or further include elements inherent to the process, method, product or the device. Without more limitations, elements defined by the sentence "including one..." does not exclude that there are still other same elements in the process, method, product, or device including the elements.

The various embodiments in the specification are described in a progressive mode, the same or similar parts among the embodiments may refer to one another, and what is mainly described in each embodiment is different from other embodiments. Especially, as for the system embodiment, the system embodiment is basically similar to the method embodiment, so the system embodiment is simply described, and related parts refer to a part of description of the method embodiment.

## Claims

**1.** A channel information feedback method, comprising:

performing channel estimation according to a first pilot signal sent by a first communication node, so as to acquire first channel information;
determining, according to the first channel information, a codebook set for quantized channel feedback;
selecting an optimal codeword from the codebook set, wherein the optimal codeword is used for quantitatively characterizing the first channel information; and
feeding back target indication information to the first communication node, wherein the target indication information is used for indicating the first communication node to determine the optimal codeword;
wherein codewords in the codebook set conform to a model as follows:

$$W = \begin{bmatrix} \alpha_1 v_1 & \alpha_2 v_2 \\ \alpha_3 v_3 & \alpha_4 v_4 \end{bmatrix}$$

wherein W is a vector or matrix with Nt rows and r columns, Nt≥2 and Nt is an integer, r≥1 and r is an integer, $v_i$ is a precoding vector or precoding matrix for array beam regulation, $\alpha_i$ is a complex number, and i E {1,2,3,4}.

**2.** The method according to claim 1, wherein the target indication information comprises first indication information for indicating $v_i$ and second indication information for indicating $\alpha_k$, k E {1,2,3,4}, wherein $v_i$ and $\alpha_k$ meet:

a value set of $v_i$ is determined by a value of $\alpha_k$; or
a value set of $\alpha_k$ is determined by a value of $v_i$.

**3.** The method according to claim 2, wherein at least one piece of the first indication information indicates whether moduli of values in a value set of at least one $\alpha_k$ are equal.

**4.** The method according to claim 2, wherein at least one piece of the first indication information indicates a value range of a value set of at least one $\alpha_k$.

**5.** The method according to claim 3 or 4, wherein prior to determining, according to the first channel information, the codebook set for the quantized channel feedback, the method further comprises:

determining, according to a plurality of pieces of the first indication information, a value set of $\alpha_k$ ; or
determining, according to a plurality of pieces of the first indication information, a value set of $v_k$, wherein i is not equal to k.6. The method according to claim 1, wherein in the model, $v_1 = v_3, v_2 = v_4$, $\alpha_1 = \alpha_2 = 1$, and $\alpha_4 = -\alpha_3 = \alpha$, wherein $\alpha$ is a complex number, and the codewords in the codebook set conform to a following model:

$$W = \begin{bmatrix} v_1 & v_2 \\ \alpha v_1 & -\alpha v_2 \end{bmatrix}.$$

**7.** An electronic device, comprising:

a processor; and
a memory configured to store computer-executable instructions, wherein the executable instructions, when executed, enables the processor to perform the channel information feedback method according to any one of claims 1 to 6.

**8.** A computer-readable medium, storing one or more programs, wherein the one or more programs, when executed by an electronic device comprising a plurality of application programs, enables the electronic device to perform the channel information feedback method according to any one of claims 1 to 6.

Perform channel estimation according to a first pilot signal sent by a first communication node, so as to acquire first channel information

S110

Determine a codebook set for quantized channel feedback according to the first channel information

S120

Select an optimal codeword from the codebook set

S130

Feed back target instruction information to the first communication node

S140

FIG. 1

Perform channel estimation according to a first pilot signal sent by a first communication node, so as to acquire first channel information ⟶ S210

Determine a value set of according to a plurality of pieces of first instruction information; or determine a value set of according to the plurality of pieces of first instruction information, where i is not equal to k ⟶ S220

Determine a codebook set for quantized channel feedback according to the first channel information ⟶ S230

Select an optimal codeword from the codebook set ⟶ S240

Feed back target instruction information to the first communication node ⟶ S250

FIG. 2

300

310

Estimating module

320

First determining module

330

Selecting module

340

Feedback module

FIG. 3

FIG. 4

## INTERNATIONAL SEARCH REPORT

| | International application No. |
|---|---|
| | **PCT/CN2023/132898** |

### A.  CLASSIFICATION OF SUBJECT MATTER

H04B7/0456(2017.01)i

According to International Patent Classification (IPC) or to both national classification and IPC

### B.  FIELDS SEARCHED

Minimum documentation searched (classification system followed by classification symbols)

IPC:H04B H04W H04L

Documentation searched other than minimum documentation to the extent that such documents are included in the fields searched

Electronic data base consulted during the international search (name of data base and, where practicable, search terms used)

CNTXT, CNKI, ENTXT, DWPI, IEEE, 3GPP: 信道, 信息, 反馈, 导频, 估计, 量化, 码本, 集合, 最佳码字, 目标指示信息, 阵列, 波束, 预编码, 矢量, channel, information, codebook, feedback, best codeword, pilot, estimat+, quantiz+, set, class, cluster, object, indicat+, array, beam, precod+, vector

### C.  DOCUMENTS CONSIDERED TO BE RELEVANT

| Category* | Citation of document, with indication, where appropriate, of the relevant passages | Relevant to claim No. |
|---|---|---|
| A | CN 107370530 A (HUAWEI TECHNOLOGIES CO., LTD.) 21 November 2017 (2017-11-21) description, paragraphs 67-179 | 1-8 |
| A | CN 111435886 A (TELECOMMUNICATIONS TECHNOLOGY RESEARCH INSTITUTE CO., LTD.) 21 July 2020 (2020-07-21) entire document | 1-8 |
| A | CN 114257341 A (ZTE CORP.) 29 March 2022 (2022-03-29) entire document | 1-8 |
| A | Pantech. "R1-100666, "Feedback to support enhanced MU-MIMO"" *3GPP tsg_ran\WG1_RL1*, No. TSGR1_59b, 13 January 2010 (2010-01-13), entire document | 1-8 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2024** | **22 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132898**

| Patent document cited in search report | | | Publication date (day/month/year) | Patent family member(s) | | | Publication date (day/month/year) |
|---|---|---|---|---|---|---|---|
| CN | 107370530 | A | 21 November 2017 | EP | 3444959 | A1 | 20 February 2019 |
| | | | | EP | 3444959 | A4 | 24 April 2019 |
| | | | | EP | 3444959 | B1 | 26 February 2020 |
| | | | | WO | 2017193731 | A1 | 16 November 2017 |
| | | | | US | 2019081681 | A1 | 14 March 2019 |
| | | | | US | 10498423 | B2 | 03 December 2019 |
| CN | 111435886 | A | 21 July 2020 | None | | | |
| CN | 114257341 | A | 29 March 2022 | None | | | |

Form PCT/ISA/210 (patent family annex) (July 2022)

**REFERENCES CITED IN THE DESCRIPTION**

**Patent documents cited in the description**

- CN 202211697500